# EUROPÄISCHE PATENTSCHRIFT

(11) **EP 3 321 163 B1**
(45) Veröffentlichungstag und Bekanntmachung des Hinweises auf die Patenterteilung: **11.03.2020**
(21) Anmeldenummer: 17201277.5
(22) Anmeldetag: 13.11.2017
(51) Int. Cl.: B63B 39/08, B63B 43/04, G05D 1/08

(54) **VERFAHREN ZUR DÄMPFUNG DER ROLLBEWEGUNG EINES WASSERFAHRZEUGES**
METHOD FOR DAMPING THE ROLL MOVEMENT OF A WATERCRAFT
PROCÉDÉ D'AMORTISSEMENT DU MOUVEMENT DE ROULIS D'UNE EMBARCATION

(30) Priorität: 15.11.2016 DE 102016121933
(43) Veröffentlichungstag der Anmeldung: 16.05.2018
(73) Patentinhaber: Schottel GmbH, 56322 Spay/Rhein (DE)
(72) Erfinder: Kaul, Stefan, 56281 Emmelshausen (DE)
(74) Vertreter: Wagner Albiger & Partner Patentanwälte mbB

(56) Entgegenhaltungen:
- EP-A1- 0 129 810
- EP-A1- 0 423 901
- WO-A1-2008/030149
- WO-A2-2010/112391
- GB-A- 902 509
- US-A- 4 380 206
- US-A1- 2010 147 204
- US-A1- 2016 288 893

## Beschreibung

Die Erfindung betrifft ein Verfahren zur Dämpfung der Rollbewegung eines Wasserfahrzeuges um die Längsachse desselben, insbesondere zur Dämpfung der Rollbewegung eines Schiffes um die in Längsachsenrichtung weisende Fahrtrichtung, wobei das Wasserfahrzeug mindestens einen Antrieb zur Erzeugung eines Schubstrahles für das Wasserfahrzeug aufweist.

Aus der gattungsbildenden DE 10 2005 056 469 A1 ist es bekannt, bei Wasserfahrzeugen mit einem sogenannten Voith-Schneider Propeller eine die Rollbewegung des Wasserfahrzeuges charakterisierende Messgröße zu messen und durch Beeinflussung der Steigung der einzelnen Propellerflügel des Voith-Schneider Propellers in Abhängigkeit von der gemessenen Messgröße eine der Rollbewegung entgegenwirkende Querkraft zu erzeugen. Die sich insbesondere durch Seegang und anlaufende Wellen einstellende Rollbewegung eines solchermaßen ausgestatteten Wasserfahrzeuges lässt sich auf diese Weise erheblich verringern, was außerordentlich wünschenswert ist. Allerdings ist das bekannte Verfahren auf die Applikation bei Voith-Schneider Propellern beschränkt und somit nicht auf Wasserfahrzeuge übertragbar, die mit anderen Bauformen von Antrieben ausgerüstet sind.

Die US 2016/0288893 A1 beschreibt einen Schiffsantrieb, bei welchem die Richtungssteuerung durch Verschwenken um die Hochachse und eine Rolldämpfung durch zusätzliches Schwenken um eine parallel zur Längsachse des Schiffes verlaufende horizontale Achse bewirkt wird. Dies ist baulich aufwendig und lässt sich nur an speziell eingerichteten Antrieben realisieren.

Die GB 902 509 A lehrt, quer zum Hauptantrieb gerichtete Positionierantriebe zusätzlich zum Hauptantrieb auch während der Streckenfahrt zu aktivieren, um die Rollbewegung zu dämpfen. Die bei Streckenfahrt ausgefahrenen und aktivierten Positionierantriebe verschlechtern jedoch die Rumpfumströmung signifikant, was außerordentlich unerwünscht ist.

Das Dokument US 2010/147204 A1 wird als nächstliegender Stand der Technik betrachtet und offenbart den Oberbegriff des Anspruchs 1.

Aufgabe der Erfindung ist es, ein Verfahren zur Dämpfung der Rollbewegung eines Wasserfahrzeuges vorzuschlagen, welches über alternative Antriebe zu einem Voith-Schneider-Propeller verfügt und die Nachteile des Standes der Technik überwindet. Zur Lösung der gestellten Aufgabe wird erfindungsgemäß ein Verfahren gemäß den Merkmalen des Patentanspruchs 1 vorgeschlagen.

Vorteilhafte Ausgestaltungen und Weiterbildungen der Erfindung sind Gegenstand der abhängigen Ansprüche.

Die Erfindung beruht darauf, dass der Antrieb zur Erzeugung des Schubstrahls um die Hochachse des Wasserfahrzeuges schwenkbar ist und nach Maßgabe einer Steuerung um die Hochachse in einen Steuerwinkel geschwenkt wird und in Abhängigkeit von der gemessenen Meßgröße ein Dämpfungswinkel berechnet wird, der dem Steuerwinkel des mindestens einen Antriebes überlagert wird und der Antrieb aus dem vorgegebenen Steuerwinkel um einen Dämpfungswinkel zur Erzeugung der Querkraft um die Hochachse verschwenkt wird, dergestalt, dass der Steuerwinkel während einer Rollperiode des Wasserfahrzeuges um den Dämpfungswinkel vergrößert oder verkleinert wird. Als Antrieb im Sinne der Erfindung kommen insbesondere Ruderpropeller und/oder Pump Jets in Betracht. Im Sinne der Erfindung wird unter einem Ruderpropeller jede Art von um die Hochachse schwenkbaren Propellergondelantrieben verstanden, wie z.B. auch als SCHOTTEL-Ruderpropeller bekannte Ausführungsformen sowie elektrische, azimuthierende POD-Antriebe.

Erfindungsgemäß wird somit durch den vorhandenen mindestens einen und vorzugsweise ausschließlich um die Hochachse des Wasserfahrzeuges schwenkbaren Antrieb als Vortriebs- und Steuerungsanlage des Wasserfahrzeuges eine Querkraft mit einem entsprechenden Drehmoment um die Längsachse des Wasserfahrzeuges erzeugt, welches der Rollbewegung als Rückstellmoment entgegenwirkt. Die Erfindung nutzt dabei die Eigenschaft eines Ruderpropellers oder Pump Jets, den erzeugten Schub durch Drehen des Antriebes um die Vertikal- bzw. Hochachse mithilfe des integrierten Steuergetriebes in jede beliebige Richtung schwenken zu können. Genauer gesagt wird durch die Verschwenkung des Schubvektors des Antriebes eine Querkraftkomponente erzeugt, die über den Hebelarm zwischen Kraftangriff am Antrieb und Drehpunkt der Rollbewegung des Wasserfahrzeuges ein Drehmoment um die Längsachse desselben bewirkt.

Die Größe der erzeugten Querkraft und damit des hervorgerufenen Drehmomentes kann über die von einer geeigneten Steuereinrichtung berechnete Größe des Dämpfungswinkels eingestellt werden, um den der Antrieb aus der ursprünglich von der Steuerung gewünschten Orientierung um die Hochachse verschwenkt wird. Je größer der Dämpfungswinkel ausfällt, umso höhere Querkräfte werden erzeugt.

Darüber hinaus beeinflusst die vorzugsweise periodische Erzeugung der Querkraft zur Erzeugung der Rolldämpfung auch das Gieren, d.h. das Drehen des Wasserfahrzeuges um die Vertikalachse, begründet durch eine bewusst nicht optimale Positionierung der Antriebsausrichtung. Der Einfluss auf das Gieren kann in der Abstimmung des Systems berücksichtigt werden.

Nach einem Vorschlag der Erfindung werden die Dauer der Rollbewegung und oder die Geschwindigkeit und Richtung der Rollbewegung gemessen und anhand der erhaltenen Messwerte die erforderlichen Dämpfungswinkel ermittelt. Hierbei kann eine Steuerungseinrichtung eingesetzt werden, die mittels eines entsprechenden Algorithmus aus in einer Datenbank hinterlegten charakteristischen Größen des Wasserfahrzeuges, wie Masseschwerpunkt, Verdrängung, Hebelarme und Schubkurven der vorhandenen Antriebe sowie den aktuell ermittelten Messgrößen entsprechende Dämpfungswinkel berechnet.

Nach einem weiteren Vorschlag der Erfindung wird der erforderliche Dämpfungswinkel über einen Algorithmus der Steuereinrichtung ermittelt, der als selbstlernendes System ausgestaltet ist. Dazu wird vorgeschlagen, mittels des in der Steuereinrichtung als Software laufenden Algorithmus die Parameter, welche das Rollverhalten des Wasserfahrzeuges beschreiben, wie z.B. Dauer, Geschwindigkeit und Richtung der Rollbewegung und/oder externe Einflüsse wie Wind- und Strömungslast und -richtung, zu erfassen und beispielsweise empirisch zu bewerten. Nach einer gewissen Lernphase kann ein solcher Algorithmus sodann das charakteristische Rollverhalten des Wasserfahrzeuges abbilden und zur Regelung und Berechnung der einzustellenden Dämpfungswinkel heranziehen. Damit ist ein solches System auch selbsttätig in der Lage, z.B. Änderungen der Rollneigung aufgrund unterschiedlicher Beladungszustände des Wasserfahrzeuges zu berücksichtigen.

Die genannten gemessenen Eingangsgrößen sind beispielsweise mit einem geeigneten Beschleunigungssensor an Bord des Wasserfahrzeuges fortlaufend ermittelbar. Zusätzlich kann die Steuerungseinrichtung auch eine Prognose der Rollbewegung auf Basis der aktuell gemessenen Wellenbewegung am Wasserfahrzeug ermitteln und in die Berechnung der Dämpfungswinkel einbeziehen.

Der auf diese Weise berechnete Dämpfungswinkel wird sodann als Winkelvorgabe bzw. Steuerbefehl der eigentlichen Steuerungseinrichtung des Antriebes übermittelt und dem zum Beispiel am Ruder oder der automatischen Navigationseinrichtung des Wasserfahrzeuges vorgegebenen Steuerwinkel überlagert und führt je nach Lage des Wasserfahrzeuges innerhalb der Rollperiode zu einer Vergrößerung oder einer Verkleinerung des Steuerwinkels um den berechneten Dämpfungswinkel.

Da bei Verschwenken der Antriebe aus dem vorgegebenen Steuerwinkel um den Dämpfungswinkel unvermeidlich der Schub für die gewünschte Fahrtrichtung bzw. Schubrichtung entsprechend vermindert wird, wird nach einem weiteren Vorschlag der Erfindung während der Verschwenkung um den Dämpfungswinkel die Leistungsaufnahme des entsprechenden Antriebes erhöht. Bei einem als Festpropeller ausgebildeten Ruderpropeller (FPP) oder einem Pump Jet kann dies durch eine Drehzahlerhöhung und bei einem als Verstellpropeller (CPP) ausgebildeten Ruderpropeller durch entsprechende Nachregelung der Propellersteigung erfolgen.

Nach einem weiteren Vorschlag der Erfindung erfolgt die Schwenkbewegung des Antriebes um den Dämpfungswinkel entsprechend der vorherrschenden Rollperiode phasenversetzt, damit die gewünschte Dämpfung der Rollbewegung erzielt werden kann. Diese Bewegung ist der Schwenkbewegung nach Maßgabe des Steuerwinkels zum Steuern und Manövrieren des Wasserfahrzeuges überlagert.

Sofern das mit dem erfindungsgemäßen Verfahren hinsichtlich seiner Rollbewegung gedämpfte Wasserfahrzeug mit mindestens zwei beidseits der Längsachse des Wasserfahrzeuges angeordneten Antrieben ausgerüstet ist, kann während der Dauer einer Rollbewegung zu einer Seite der Längsachse lediglich der auf dieser Seite angeordnete Antrieb um den Dämpfungswinkel verschwenkt werden, während der auf der gegenüberliegenden Längsseite angeordnete Antrieb vollständig für die Erzeugung des gewünschten Vortriebs und gegebenenfalls erforderlichen Kurskorrekturen genutzt werden kann und exakt in dem gewünschten Steuerwinkel ausgerichtet ist. Insofern werden die auf gegenüberliegenden Längsseiten angeordneten Antriebe abwechselnd zur Dämpfung der Rollbewegung mit entsprechenden Dämpfungswinkeln aus dem Steuerwinkel verschwenkt.

Die Erzeugung eines dem Steuerwinkel überlagerten Dämpfungswinkels kann während lediglich eines Bruchteiles der gesamten Rollperiode zu einer der Längsseiten des Wasserfahrzeuges vorgenommen werden, vorzugsweise während der ersten Hälfte der gesamten Rollperiode, wodurch Leistungsverluste minimiert werden.

Da die Rollbewegung eines Wasserfahrzeuges im Wesentlichen periodisch um die Nulllage erfolgt, werden auch die Antrieb in einer Ausführungsform der Erfindung entsprechend periodisch aus einer mit dem Steuerwinkel übereinstimmenden Nulllage bis zum Erreichen des Dämpfungswinkels und wieder zurück zur Nulllage um die Hochachse verschwenkt.

Zusätzlich zu der Querkraft-Erzeugung durch Drehung des Schubvektors in der vorangehenden erläuterten Weise kann auch eine Querkraft genutzt werden, die durch die Umströmung von geeignet großen Gehäuseflächen entsteht, was beispielsweise durch ansprechende Formgebung der Flächen, wie Wölbung, winklige Anstellung bis hin zur aktiven Verstellung von Flächen ähnlich eines Ruders erfolgen kann. Zusätzlich können die erzeugten Querkräfte auch durch Hilfsanlagen, erhöht werden, zum Beispiel durch Querstrahlanlagen, Pumpjets und ausfahrbare Ruderpropeller sowie ähnliche Positionierhilfen, die beliebig im Wasserfahrzeug positioniert sein können.

Das erfindungsgemäße Verfahren ermöglicht die Dämpfung der Rollbewegung des Wasserfahrzeuges sowohl im Fahrtzustand als auch während der sogenannten dynamischen Positionierung, d.h. dem Halten der Position unabhängig von der Wasserströmung und dem Seegang.

Für die Dämpfung der Rollneigung im Fahrtzustand wird der Schubvektor des mindestens einen Antriebes aus der die 0°-Lage darstellenden Haupt- bzw. Steuerrichtung, d.h. dem Steuerwinkel, periodisch um den Dämpfungswinkel geschwenkt. Hierbei hat sich gezeigt, dass zu Beginn der Dämpfung größere Dämpfungswinkel zum Einfangen der Rollbewegung erforderlich sind, die sich jedoch aufgrund der Trägheit des Wasserfahrzeuges rasch verringern.

Sofern sich das Wasserfahrzeug im Modus des sogenannten dynamischen Positionierens (DP Modus) befindet, liegt die Hauptaufgabe darin, die vorgegebene Position unabhängig von äußeren Einflüssen, wie Strömung und Seegang zu halten. Dafür werden die Schubvektoren sämtlicher vorhandener Antriebe in Größe und Richtung dynamisch den Seegangs-Bedingungen angepasst. Da ein Wechsel der Richtung der Querkraft durch das entsprechend erforderliche Umsteuern der Antriebe um bis zu 180° im Verhältnis zur Rollperiode eine zu lange Zeit erfordern würde und überdies mit erheblicher mechanischer Belastung der Ruderpropeller einhergehen würde, wird vorgeschlagen, die Ruderpropeller in einem vorbestimmten Winkel zueinander auszurichten. Durch diese winklige Ausrichtung wird die Hauptfunktion des Haltens der Position weiterhin erfüllt, zugleich wird jedoch der erforderliche Dämpfungswinkel zur Erzeugung der rollstabilisierenden Querkraft verkleinert und kann realisiert werden.

Da überdies im DP Modus oftmals schon eine Querkraft zur Positionierung des Wasserfahrzeuges gefordert ist, steht der Schubvektor auch im Hinblick auf die Dämpfung der Rollneigung bereits in der richtigen Richtung und die erforderliche periodische Veränderung der Querkraft zur Dämpfung der Rollbewegung kann dann unter entsprechender Verringerung der Dämpfungswinkel auch über die Leistungsaufnahme des Antriebes, d.h. eine Drehzahlregelung bei Festpropellern und/oder eine Steigungsregelung bei Verstellpropellern vorgenommen werden.

Es kann überdies auch vorgesehen sein, sofern das Wasserfahrzeug mit symmetrischen, z.B. zwei beidseits der Längsachse angeordneten Antrieben ausgerüstet ist, dessen Rollneigung durch eine feste Positionierung der Antriebe im Dämpfungswinkel zueinander aufzuheben, wobei in Abhängigkeit von der gemessenen Meßgröße lediglich die Leistungsaufnahme der Antriebe wechselweise variiert wird, z.B. durch Drehzahl- oder Steigungsänderung, ohne eine weitere Verschwenkung bewirken zu müssen.

Weitere Ausgestaltungen und Einzelheiten der Erfindung werden nachfolgend anhand der Zeichnung erläutert. Es zeigen:
- Figur 1: in schematischer Darstellung die Aufsicht auf ein Wasserfahrzeug;
- Figur 2: ein die Rollbewegung des Wasserfahrzeuges über der Zeit darstellendes Diagramm.

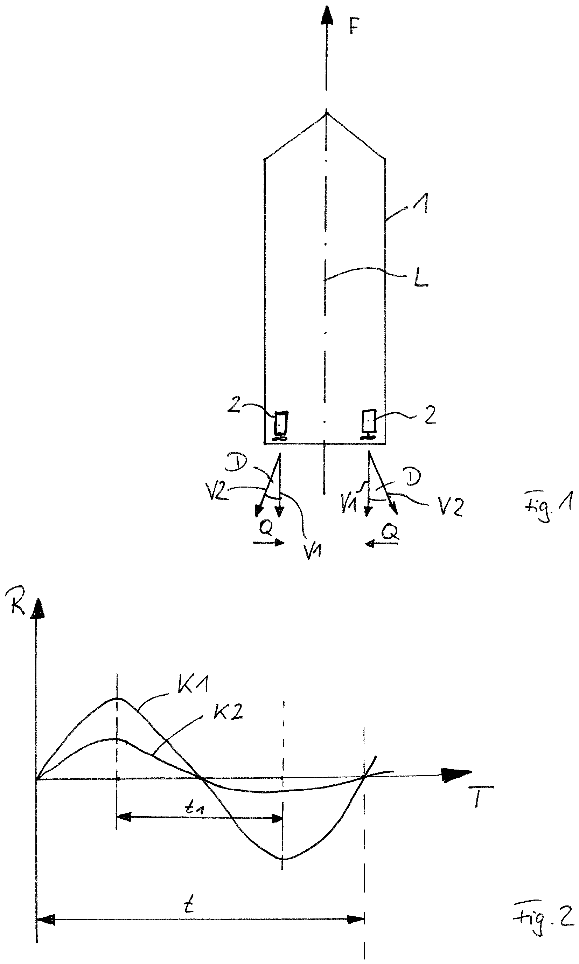

Aus der Figur 1 ist in einer stark vereinfachten schematisierten Darstellung ein Wasserfahrzeug 1 ersichtlich, welches eine Längsachse L aufweist. Mittels zweier im Heckbereich angeordneter und um die senkrecht zur Zeichenebene verlaufende Hochachse beliebig verschwenkbarer Antriebe in Form von Ruderpropellern 2 ist das Wasserfahrzeug 1 in an sich bekannter Weise antreibbar und steuerbar. Obwohl in den weiteren Erläuterungen stets Ruderpropeller als Antrieb erläutert werden, können auch andere Antriebe, insbesondere Pump Jets gleichermaßen zum Einsatz kommen und die zu Ruderpropellern erfolgenden Erläuterungen gelten sinngemäß auch für derartige Pump Jets.

Entsprechend den Vorgaben am Steuerruder bzw. der Navigationseinrichtung des Wasserfahrzeuges 1 werden die Ruderpropeller 2 um die Hochachse in einen gewünschten Steuerwinkel geschwenkt, der im dargestellten Beispiel der Figur 1 parallel zur Längsachse L des Wasserfahrzeuges 1 verläuft, sodass beide Ruderpropeller 2 einen Schubvektor V1 erzeugen, der das Wasserfahrzeug 1 in Richtung F antreibt. Durch Veränderung des Steuerwinkels um die senkrecht zur Längsachse L sowie die Zeichenebene verlaufenden Hochachsen durch die Ruderpropeller 2 können die Schubvektoren V1 entsprechend verschwenkt und damit die Vortriebsrichtung F verändert werden.

Sofern das Wasserfahrzeug 1 unter Seegangsbelastung gerät, stellt sich eine mehr oder weniger große periodische Rollbewegung um die Schiffslängsachse ein, die zu beiden Seiten der Längsachse L abwechselnd erfolgt und deren Amplitude R über der Zeit T anhand der Kurve K1 in Figur 2 ersichtlich ist. Demnach ähnelt die Rollbewegung einer Sinuskurve.

Um diese Rollbewegung zu dämpfen, verfügt das Wasserfahrzeug 1 über eine geeignete Messeinrichtung, beispielsweise mindestens einen Beschleunigungssensor, mit dem die Dauer t einer Rollbewegung zu einer Seite der Längsachse L, mithin der Abstand zweier aufeinanderfolgender Nulldurchgänge der Kurve K1 in Figur 2 und die Geschwindigkeit, Amplitude R und Richtung der Rollbewegung gemessen werden kann. Diese Messwerte charakterisieren die vorherrschende Rollbewegung des Wasserfahrzeuges 1.

Anhand dieser fortlaufend gemessenen Messwerte und einigen für das jeweilige Wasserfahrzeug 1 charakteristischen Größen, wie Masseschwerpunkt, Verdrängung, Hebelarme und Schubkurven der Ruderpropeller 2 berechnet eine geeignete Steuereinrichtung einen Dämpfungswinkel D, welcher dem Steuerwinkel des jeweiligen Ruderpropellers 2, der auf der Seite der Längsachse L positioniert ist, zu welcher die Rollbewegung erfolgt, überlagert wird, sodass der entsprechende Schubvektor V1 während der Rollbewegung um den Dämpfungswinkel D ebenfalls um die Hochachse verschwenkt wird und die mit V2 bezeichnete Vektorrichtung einnimmt. Mit dieser Verschwenkung geht entsprechend die Erzeugung einer Querkraftkomponente Q einher, die ein der Rollbewegung entgegengerichtetes Drehmoment um die Längsachse L erzeugt und insoweit der Rollbewegung entgegenwirkt.

Hierbei ist es ausreichend, wenn diese Überlagerung des berechneten Dämpfungswinkels D während der mit t1 in Figur 2 bezeichneten ersten Hälfte einer einzelnen Rollperiode mit Zeitdauer t erfolgt, anschließend kann der Schubvektor wieder in die mit V1 bezeichnete Nulllage zurückkehren. Im Ergebnis stellt sich sodann am Wasserfahrzeug 1 gegenüber der ungedämpften Kurve K1 die mit K2 bezeichnete Rollkurve ein, bei der die Amplituden der Rollbewegung im zeitlichen Verlauf stark abgedämpft und sehr deutlich minimiert werden. Dementsprechend können auch die erforderlichen Größen der zu überlagernden Dämpfungswinkel D über die Zeit verringert werden, und zwar proportional zur erzielten Dämpfungswirkung wie aus Figur 2 ersichtlich.

Der jeweils auf der anderen Seite der Längsachse L befindliche Ruderpropeller 2 kann währenddessen unverändert in dem vorgegebenen Steuerwinkel verbleiben und vollständig zum Vortrieb beitragen bzw. durch entsprechende Veränderung des Steuerwinkels Kurskorrekturen des Wasserfahrzeuges 1 bewirken. Sobald die Rollbewegung des Wasserfahrzeuges zur anderen Seite der Längsachse L wechselt, wird der entsprechende Ruderpropeller 2 auf dieser Seite der Längsachse L mit dem berechneten Dämpfungswinkel D überlagert.

Schließlich kann während der Überlagerung des Steuerwinkels mit dem Dämpfungswinkel D zur Kompensation der durch die Querkrafterzeugung einhergehenden Leistungsverminderung in Vortriebsrichtung F die Leistungsaufnahme des Ruderpropellers vorübergehend erhöht werden, etwa bei Ausführung des Ruderpropellers 2 als Festpropeller durch eine Anhebung der Drehzahl oder bei Ausführung des Ruderpropellers 2 als Verstellpropeller durch Erhöhung der Propellersteigung.

Das vorangehende erläuterte Verfahren kann nicht nur bei neuen Anlagen zur Ansteuerung von Ruderpropellern 2 in Wasserfahrzeugen 1 eingesetzt werden, sondern im Rahmen eines Updates auch bei bestehenden Anlagen nachgerüstet werden.

## Patentansprüche

1. Verfahren zur Dämpfung der Rollbewegung eines Wasserfahrzeuges (1) um die Längsachse (L) desselben, wobei das Wasserfahrzeug (1) mindestens einen Antrieb zur Erzeugung eines Schubstrahles für das Wasserfahrzeug (1) aufweist, bei welchem mindestens eine die Rollbewegung charakterisierende Meßgröße gemessen und in Abhängigkeit von der gemessenen Meßgröße eine der Rollbewegung entgegenwirkende Querkraft erzeugt wird, **dadurch gekennzeichnet dass** die Dauer der Rollbewegung und/oder die Geschwindigkeit und Richtung der Rollbewegung als Meßgröße gemessen werden und der den Schubstrahl erzeugende Antrieb um die Hochachse des Wasserfahrzeuges (1) schwenkbar ist und nach Maßgabe einer Steuerung um die Hochachse in einen Steuerwinkel geschwenkt wird und in Abhängigkeit von der gemessenen Meßgröße ein Dämpfungswinkel berechnet wird, der dem Steuerwinkel des mindestens einen Antriebes (2) überlagert wird und der Antrieb aus dem vorgegebenen Steuerwinkel um einen Dämpfungswinkel (D) zur Erzeugung der Querkraft um die Hochachse verschwenkt wird, dergestalt, dass der Steuerwinkel während einer Rollperiode des Wasserfahrzeuges um den Dämpfungswinkel vergrößert oder verkleinert wird.

2. Verfahren nach Anspruch 1, **dadurch gekennzeichnet, dass** der Antrieb nach Maßgabe des Steuerwinkels und des überlagerten Dämpfungswinkels (D) ausschließlich um die Hochachse des Wasserfahrzeuges verschwenkt wird.

3. Verfahren nach einem der Ansprüche 1 oder 2, **dadurch gekennzeichnet, dass** der erforderliche Dämpfungswinkel über einen Algorithmus der Steuereinrichtung ermittelt wird, der als selbstlernendes System ausgestaltet ist, wobei mittels des Algorithmus die Dauer, Geschwindigkeit und/oder Richtung der Rollbewegung und/oder externe Einflüsse wie Windlast und/oder Strömungslast und/oder Windrichtung und/oder Strömungsrichtung erfasst und bewertet werden und zur Berechnung der Dämpfungswinkel verwendet werden.

4. Verfahren nach einem der Ansprüche 1 bis 3, **dadurch gekennzeichnet, dass** während der Verschwenkung um den Dämpfungswinkel die Leistungsaufnahme des Antriebes (2) erhöht wird.

5. Verfahren nach einem der Ansprüche 1 bis 4, **dadurch gekennzeichnet, dass** mindestens zwei beidseits der Längsachse des Wasserfahrzeuges (1) angeordnete Antriebe (2) vorgesehen sind und während der Dauer (t) einer Rollbewegung zu einer Seite der Längsachse (L) der auf dieser Seite angeordnete Antrieb (2) um den Dämpfungswinkel (D) verschwenkt wird.

6. Verfahren nach einem der Ansprüche 1 bis 5, **dadurch gekennzeichnet, dass** der Antrieb (2) während der halben Dauer (t₁) der Rollbewegung um den Dämpfungswinkel (D) verstellt wird.

7. Verfahren nach Anspruch 1, **dadurch gekennzeichnet, dass** zwei Antriebe (2) beidseits der Längsachse des Wasserfahrzeuges vorgesehen sind und die Antriebe (2) in dem Dämpfungswinkel (D) zueinander ausgerichtet werden und in Abhängigkeit von der gemessenen Meßgröße die Leistungsaufnahme der Antriebe (2) wechselweise variiert wird.

8. Verfahren nach einem der Ansprüche 1 bis 7, **dadurch gekennzeichnet, dass** zur Ermittlung des Dämpfungswinkels (D) Vorgabewerte des Wasserfahrzeuges (1) und die mindestens eine Meßgröße einer Steuerungseinrichtung zugeführt werden und die Steuerungseinrichtung aus den Vorgabewerten und der mindestens einen Meßgröße fortlaufend Dämpfungswinkel (D) ermittelt, die den Steuerwinkeln des mindestens einen Antriebes (2) überlagert werden.

9. Verfahren nach Anspruch 8, **dadurch gekennzeichnet, dass** die Steuerungseinrichtung zusätzlich eine Prognose der Rollbewegung auf Basis der aktuell gemessenen Wellenbewegung am Wasserfahrzeug (1) ermittelt und in die Berechnung der Dämpfungswinkel (D) einbezieht.

10. Verfahren nach einem der Ansprüche 1 bis 9, **dadurch gekennzeichnet, dass** als Antrieb (2) Ruderpropeller oder Pump Jets eingesetzt werden.

## Claims

1. A method for damping the rolling motion of a watercraft (1) about the longitudinal axis (L) thereof, wherein the watercraft (1) has at least one drive for generating a thrust jet for the watercraft (1), in which at least one measured value characterising the rolling motion is measured and a transverse force counteracting the rolling motion is generated as a function of the measured value, **characterised in that** the duration of the rolling motion and/or the speed and direction of the rolling motion are measured as the measured value, and the drive generating the thrust jet can be pivoted about the vertical axis of the watercraft (1) and is pivoted about the vertical axis into a control angle in accordance with a controller, and a damping angle is calculated as a function of the measured value, which is superimposed on the at least one drive (2), and the drive is pivoted from the specified control angle by a damping angle (D) about the vertical axis in order to generate the transverse force, such that the control angle is increased or decreased by the damping angle during a rolling period of the watercraft.

2. The method as claimed in claim 1, **characterised in that** the drive is pivoted exclusively about the vertical axis of the watercraft in accordance with the control angle and the superimposed damping angle (D).

3. The method as claimed in claim 1 or 2, **characterised in that** the required damping angle is determined using an algorithm of the control device, which is designed as a self-learning system, which algorithm is used to detect and evaluate the duration, the speed and/or the direction of rolling and/or of external influences such as wind load and/or current load and/or wind direction and/or current direction, which are used to calculate the damping angles.

4. The method as claimed in any one of claims 1 to 3, **characterised in that** the power consumption of the drive (2) is increased during the pivoting by the damping angle.

5. The method as claimed in any one of claims 1 to 4, **characterised in that** at least two drives (2) disposed on either side of the longitudinal axis of the watercraft (1) are provided and during the duration (t) of a rolling motion to one side of the longitudinal axis (L), the drive (2) disposed on this side pivots by the damping angle (D).

6. The method as claimed in any one of claims 1 to 5, **characterised in that** the drive (2) is adjusted by the damping angle (D) during half the duration (t₁) of the rolling motion.

7. The method as claimed in claim 1, **characterised in that** two drives (2) are provided on either side of the longitudinal axis of the watercraft and the drives (2) are aligned with respect to one another at the damping angle (D) and the power consumption of the drives (2) is varied alternately as a function of the measured value.

8. The method as claimed in any of claims 1 to 7, **characterised in that** for determining the damping angle (D), default values of the watercraft (1) and the at least one measured value are fed to a control device, and the control device continuously determines from the default value and the at least one measured value damping angles (D) that are superimposed on the control angles of the at least one drive (2).

9. The method as claimed in claim 8, **characterised in that** the control device additionally determines a prognosis of the rolling motion on the basis of the currently measured wave movement at the watercraft (1) and includes it in the calculation of the damping angles (D).

10. The method as claimed in any of claims 1 to 9, **characterised in that** rudder propellers or pump jets are used as the drive (2).

## Revendications

1. Procédé d'atténuation du mouvement de roulis d'une embarcation (1) autour de son axe longitudinal (L), dans lequel l'embarcation (1) présente au moins un entraînement destiné à générer un jet de poussée pour l'embarcation (1), dans lequel au moins une variable caractérisant le mouvement de roulis est mesurée et une force transversale agissant à l'encontre du mouvement de roulis est générée en fonction de la variable mesurée, **caractérisé en ce que** la durée du mouvement de roulis et/ou la vitesse et la direction du mouvement de roulis sont mesurées en tant que variables et l'entraînement générant le jet de poussée peut être pivoté autour de l'axe vertical de l'embarcation (1) et est pivoté selon un angle de commande autour de l'axe vertical conformément à une commande et un angle d'atténuation superposé à l'angle de commande du au moins un entraînement (2) est calculé en fonction de la variable mesurée et l'entraînement est basculé autour de l'axe vertical à partir de l'angle de commande prédéterminé et à concurrence d'un angle d'atténuation (D) afin de générer la force transversale, de sorte que l'angle de commande est augmenté ou diminué à concurrence de l'angle d'atténuation pendant une période de roulis de l'embarcation.

2. Procédé selon la revendication 1, **caractérisé en ce que** l'entraînement est basculé exclusivement autour de l'axe vertical de l'embarcation conformément à l'angle de commande et à l'angle d'atténuation (D) superposé.

3. Procédé selon la revendication 1 ou 2, **caractérisé en ce que** l'angle d'atténuation requis est déterminé par un algorithme du dispositif de commande conçu en tant que système à auto-apprentissage, dans lequel la durée, la vitesse et/ou la direction du mouvement de roulis et/ou des influences externes telles que la charge de vent et/ou la charge de courant et/ou la direction du vent et/ou la direction du courant sont détectées et évaluées et utilisées pour le calcul de l'angle d'atténuation au moyen de l'algorithme.

4. Procédé selon l'une quelconque des revendications 1 à 3, **caractérisé en ce que** la consommation d'énergie de l'entraînement (2) est augmentée pendant le basculement à concurrence de l'angle d'atténuation.

5. Procédé selon l'une quelconque des revendications 1 à 4, **caractérisé en ce qu'**au moins deux entraînements (2) agencés des deux côtés de l'axe longitudinal de l'embarcation (1) sont prévus et, pendant la durée (t) d'un mouvement de roulis vers un côté de l'axe longitudinal (L), l'entraînement (2) agencé dudit côté est basculé à concurrence de l'angle d'atténuation (D).

6. Procédé selon l'une quelconque des revendications 1 à 5, **caractérisé en ce que** l'entraînement (2) est ajusté à concurrence de l'angle d'atténuation (D) pendant la demi-durée (t₁) du mouvement de roulis.

7. Procédé selon la revendication 1, **caractérisé en ce que** deux entraînements (2) sont prévus des deux côtés de l'axe longitudinal de l'embarcation et les entraînements (2) sont alignés selon l'angle d'atténuation (D) et la consommation d'énergie des entraînements (2) est modifiée de manière alternée en fonction de la variable mesurée.

8. Procédé selon l'une quelconque des revendications 1 à 7, **caractérisé en ce que** des valeurs par défaut de l'embarcation (1) et la au moins une variable sont fournies à un dispositif de commande afin de déterminer l'angle d'atténuation (D) et le dispositif de commande détermine de manière continue, à partir des valeurs par défaut et de la au moins une variable, des angles d'atténuation (D) qui sont superposés aux angles de commande du au moins un entraînement (2).

9. Procédé selon la revendication 8, **caractérisé en ce que** le dispositif de commande détermine en outre un pronostic du mouvement de roulis sur la base du mouvement des vagues actuellement mesuré au niveau de l'embarcation (1) et l'intègre dans le calcul de l'angle d'atténuation (D).

10. Procédé selon l'une quelconque des revendications 1 à 9, **caractérisé en ce que** des hélices de gouvernail ou des hydrojets sont utilisés en tant qu'entraînement (2).
